# FASCICULE DE BREVET EUROPEEN

(11) **EP 3 977 038 B1**
(45) Date de publication et mention de la délivrance du brevet: **27.12.2023**
(21) Numéro de dépôt: 20728783.0
(22) Date de dépôt: 02.06.2020
(51) Int. Cl.: F41G 3/16, F41G 3/22, F41G 3/02, G01C 1/02, G01C 15/00, G02B 23/14

(54) **SYSTEME DE VISEE COMPRENANT UN DISPOSITIF DE VISEE ORIENTABLE PAR RAPPORT A UNE EMBASE**
VISIEREINRICHTUNG MIT EINER RELATIV ZU EINER BASIS AUSRICHTBAREN VISIERVORRICHTUNG
SIGHTING SYSTEM COMPRISING A SIGHTING DEVICE THAT CAN BE ORIENTED RELATIVE TO A BASE

(30) Priorité: 03.06.2019 FR 1905836
(43) Date de publication de la demande: 06.04.2022
(73) Titulaire: EXAIL, 78100 Saint-Germain-en-Laye (FR)
(72) Inventeur: VALLEE, Guillaume, 78100 Saint-Germain-en-Laye (FR); CREPY, Bruno, 78100 Saint-Germain-en-Laye (FR)
(74) Mandataire: Jacobacci Coralis Harle
(86) Numéro de dépôt international: PCT/EP2020/065237
(87) Numéro de publication internationale: WO 2020/245128

(56) Documents cités:
- JP-A- 2014 114 973
- US-A1- 2012 212 622
- US-A1- 2016 223 327

## Description

### Domaine technique de l'invention

La présente invention concerne un système de visée comprenant une embase supportant un berceau, le berceau maintenant un dispositif de visée. Le berceau est apte à faire pivoter le dispositif de visée par rapport à l'embase, pour permettre au dispositif de visée de pointer une cible. L'invention concerne également un procédé de couplage simple et rapide, entre la direction de visée du dispositif visée et une direction de positionnement de l'embase.

### État de la technique

De façon connue, un système de visée permet de pointer une cible par rapport à un référentiel. Pour cela, le système de visée comprend une embase destinée à être solidaire du référentiel et un dispositif de visée orientable par rapport à l'embase. Le dispositif de visée est maintenu à l'embase par l'intermédiaire d'un berceau, généralement motorisé, configuré pour faire pivoter le dispositif de visée autour d'un ou de plusieurs axes de rotation, afin d'aligner une direction de visée dudit dispositif sur une cible. JP 2014 114973 A divulgue un système de visée comprenant une embase supportant un berceau, le berceau maintenant un dispositif de visée muni d'une direction de visée, le berceau est apte à faire pivoter selon au moins un axe de rotation le dispositif de visée par rapport à l'embase, le système de visée comprenant un premier capteur d'inclinaison lié de manière rigide à l'embase.

Afin de localiser précisément la position de la cible par rapport au référentiel, il est primordial de connaître l'orientation de la direction de visée par rapport à l'embase. Pour cela, il est nécessaire d'effectuer un procédé de calibrage afin de coupler l'orientation de la direction de visée avec une direction de positionnement de l'embase. Pour des raisons de simplicité, le procédé de calibrage consiste à aligner la direction de visée du dispositif avec une direction de positionnement de l'embase avant d'effectuer le couplage. La précision requise est de l'ordre de 100 µrad. Pour atteindre cette précision, le procédé de calibrage nécessite l'utilisation d'un instrument encombrant, une lunette autocollimatrice, difficilement transportable sur site.

La majorité des systèmes de visée intègrent des dispositifs optroniques. Un dispositif optronique se compose d'un dispositif optique couplé à un dispositif électronique. À titre d'exemples non limitatifs, les caméras thermiques, les jumelles à vision nocturne ou encore les télémètres LASER sont des dispositifs optroniques. En raison des composants électroniques qu'ils contiennent, les dispositifs optroniques ont une fiabilité moindre que les composants permettant le basculement du berceau par rapport à l'embase. Il est ainsi plus fréquent de devoir remplacer le dispositif optronique que le dispositif de basculement. Afin de conserver la précision du système de visée après la substitution du dispositif optronique, il est nécessaire de procéder à un nouveau calibrage entre le nouveau dispositif optronique et l'embase. Or, comme mentionné ci-dessus, le procédé de calibrage requiert l'utilisation d'instruments qui ne sont pas disponibles sur site, en raison de leur encombrement. C'est ainsi qu'en cas de panne du dispositif de visée, c'est l'ensemble du système de visée qui est retourné en atelier, afin de réaliser le procédé de calibrage dans des conditions adéquates. Cela engendre des coûts significatifs d'entretien ainsi qu'un temps d'immobilisation conséquent du système de visée.

L'invention vise à proposer un système de visée comprenant un dispositif de visée orientable par rapport à une embase, apte à mettre en oeuvre un procédé de calibrage sur site qui soit simple et rapide, afin de réduire la durée ainsi que les coûts liés au remplacement du dispositif de visée en cas de panne.

### Présentation de l'invention

L'invention propose ainsi un système de visée comprenant une embase qui supporte un berceau. Le berceau maintient un dispositif de visée muni d'une direction de visée. Le berceau est apte à faire pivoter, selon au moins un axe de rotation, le dispositif de visée par rapport à l'embase. Le système de visée comprend un premier capteur d'inclinaison lié de manière rigide à l'embase, un second capteur d'inclinaison lié de manière rigide au dispositif de visée ainsi que des moyens de connexion de chaque capteur d'inclinaison à une unité centrale, l'unité centrale est apte à mesurer une différence entre les mesures réalisées par chaque capteur d'inclinaison de sorte à quantifier un angle d'inclinaison entre l'embase et le dispositif de visée.

De façon avantageuse, l'agencement particulier des capteurs d'inclinaisons sur le système de visée, permet à l'unité centrale de déterminer à tout moment de façon simple et rapide, une valeur relative à un angle d'inclinaison du dispositif de visée par rapport à l'embase du système de visée. Par les termes « angle d'inclinaison », on entend un angle mesuré entre un objet et l'axe de la gravité terrestre. Le système de visée est alors apte à mettre en oeuvre l'un des procédés de couplage décrits ci-dessous, entre la direction de visée du dispositif de visée et une direction de positionnement de l'embase sur un référentiel. On peut dès lors connaître simplement et précisément sur site, l'orientation de la direction de visée du dispositif par rapport au référentiel sur lequel l'embase est maintenue, sans recourir pour cela à des instruments encombrants.

Selon une variante de réalisation le berceau est apte à faire pivoter le dispositif de visée autour d'un axe de rotation appelé « axe site », orthogonal ou sensiblement orthogonal à la direction de visée du dispositif de visée.

Selon une variante de réalisation le berceau est apte à faire pivoter autour d'un axe de rotation appelé « axe gisement », orthogonal ou sensiblement orthogonal à l'axe site.

Selon une variante de réalisation, l'axe site est parallèle ou sensiblement parallèle à une face d'appui de l'embase, la face d'appui étant destinée à être maintenue contre un référentiel. Par le terme « référentiel », on entend par un exemple un véhicule ou un bâtiment.

Selon une variante de réalisation, le berceau est maintenu à l'embase par l'intermédiaire d'une fourche, la fourche est apte à pivoter par rapport à l'axe de gisement et à faire pivoter le berceau par rapport à l'axe site. Selon une autre variante de réalisation, le berceau est maintenu à une extrémité d'un bras articulé, apte à faire pivoter le berceau par rapport à l'axe de gisement et à l'axe site.

Selon une variante de réalisation, le système de visée comprend des moyens de motorisation pilotés par l'unité centrale, aptes à faire pivoter le berceau autour de l'axe site et de l'axe gisement.

Selon une variante de réalisation, l'unité centrale comprend des moyens de mémorisation, aptes à mémoriser au moins une mesure de référence associée au premier capteur d'inclinaison et au moins une mesure de référence associée au second capteur d'inclinaison, l'unité centrale comprend également des moyens de comparaison entre des mesures réalisées par le premier et le second capteur d'inclinaison, par rapport aux mesures de référence associées à chaque capteur d'inclinaison.

Selon une variante de réalisation, l'unité centrale comprend des moyens de communication aptes à indiquer à un dispositif tiers ou à un opérateur, une valeur relative à un angle d'inclinaison entre la partie fixe du berceau ou l'embase, et le dispositif maintenu par la partie mobile du berceau, en fonction des calculs effectués par les moyens de comparaison.

Selon une variante de réalisation, le premier capteur d'inclinaison est positionné à proximité d'une face d'appui de l'embase, la face d'appui étant destinée à être maintenue contre un référentiel. La plus petite distance entre le premier capteur d'inclinaison et la face d'appui est égale ou inférieure à 5 cm. On veillera tout particulièrement à ce que le plan de pose du premier capteur d'inclinaison et la face d'appui soient de même nature afin de limiter l'introduction de biais lors des vibrations, chocs (en limitant les faces de contacts) ou changement climatique (afin de limiter la dilation différentielle).

Selon une variante de réalisation, le second capteur d'inclinaison est positionné à proximité de la direction de visée du dispositif de visée. La plus petite distance entre le second capteur d'inclinaison et la direction de visée est égale ou inférieure à 5 cm. On veillera tout particulièrement à ce que le plan de pose du second capteur d'inclinaison et la face d'appui soient de même nature afin de limiter l'introduction de biais lors des vibrations, chocs (en limitant les faces de contacts) ou changement climatique (afin de limiter la dilation différentielle).

Selon une variante de réalisation, chaque capteur d'inclinaison possède un nombre d'axes de mesure au moins égal au nombre d'axes de rotation du berceau par rapport à l'embase. De préférence, les capteurs d'inclinaison sont agencés sur le système de visée de manière à ce que leurs axes de mesure soient parallèles ou sensiblement parallèles aux axes de rotation du berceau.

Selon une variante de réalisation, les capteurs d'inclinaison ont une précision de mesure égale ou inférieure à 0,001°. À titre d'exemple non limitatif, les capteurs d'inclinaison mettent en oeuvre la technologie des accéléromètres de type Servo d'équilibre de force.

Selon une variante de réalisation, le dispositif de visée comprend un dispositif optronique. À titre d'exemples non limitatif, le dispositif optronique peut comporter une caméra thermique, une caméra visible, une voie vision nocturne (intensification de lumière) ou encore un télémètre LASER.

L'invention concerne également une plateforme mobile comprenant un système de visée tel que défini ci-dessus. Un système de visée selon l'invention peut par exemple être monté sur un navire ou un véhicule à roues ou à chenilles.

L'invention concerne aussi un procédé de couplage d'un système de visée décrit ci-dessus, mettant en oeuvre les étapes suivantes :
- une étape de couplage entre la direction de visée du dispositif de visée et une direction de positionnement de l'embase ; puis
- une étape de mémorisation par l'unité centrale d'au moins une mesure de référence pour le premier capteur d'inclinaison et au moins une mesure de référence pour le second capteur d'inclinaison, lorsque le dispositif de visée est immobile par rapport à l'embase.

Selon une variante de réalisation, au moins une mesure de référence, associée au premier et au second capteur d'inclinaison, est mémorisée par l'unité centrale après le pivotement de l'embase autour d'un axe site orthogonal ou sensiblement orthogonal à une face d'appui de l'embase, la face d'appui étant maintenue contre un référentiel, et l'embase est pivotée plusieurs fois autour de l'axe site de manière à réaliser une rotation complète autour dudit axe. De préférence, avant chaque mesure de référence mémorisée par l'unité centrale, l'embase est pivotée autour de l'axe de rotation d'un angle compris entre 25° et 185°, de préférence d'un angle de l'ordre de 180°, 90° ou 45°.

L'invention concerne aussi un procédé de couplage d'un système de visée tel que défini ci-dessus, mettant en oeuvre les étapes suivantes :
- substitution du dispositif de visée par un autre dispositif de visée ; puis
- réalisation d'au moins une mesure par le premier et le second capteur d'inclinaison, lorsque le berceau est immobile par rapport à l'embase ; puis
- comparaison d'au moins une mesure réalisée par le premier et le second capteur d'inclinaison avec au moins une mesure de référence associée au premier et au second capteur d'inclinaison, de manière à identifier l'orientation de la direction de visée du dispositif par rapport à une direction de positionnement de l'embase.

Selon une variante de réalisation, l'unité centrale est configurée pour piloter le pivotement du dispositif de visée par rapport à l'embase à l'aide des moyens de motorisation, jusqu'à ce que les mesures réalisées par le premier et le second capteur d'inclinaison soient identiques ou sensiblement identiques aux mesures de référence associées à chaque capteur d'inclinaison.

### Description des figures

La description qui va suivre en regard des dessins annexés suivants, donnés à titre d'exemples non limitatifs, permettra de mieux comprendre en quoi consiste l'invention et comment elle peut être réalisée :
[Fig 1] représente une vue de face d'un système de visée orientable selon l'invention ;
[Fig 2] représente une vue de dessus d'un système de visée orientale illustré sur la figure 1.

### Description des modes de réalisation

Pour rappel, l'invention propose un système de visée comprenant un dispositif de visée orientable par rapport à une embase, apte à mettre en oeuvre un procédé de calibrage sur site qui soit simple et rapide, afin de réduire la durée ainsi que les coûts liés au remplacement du dispositif de visée en cas de panne.

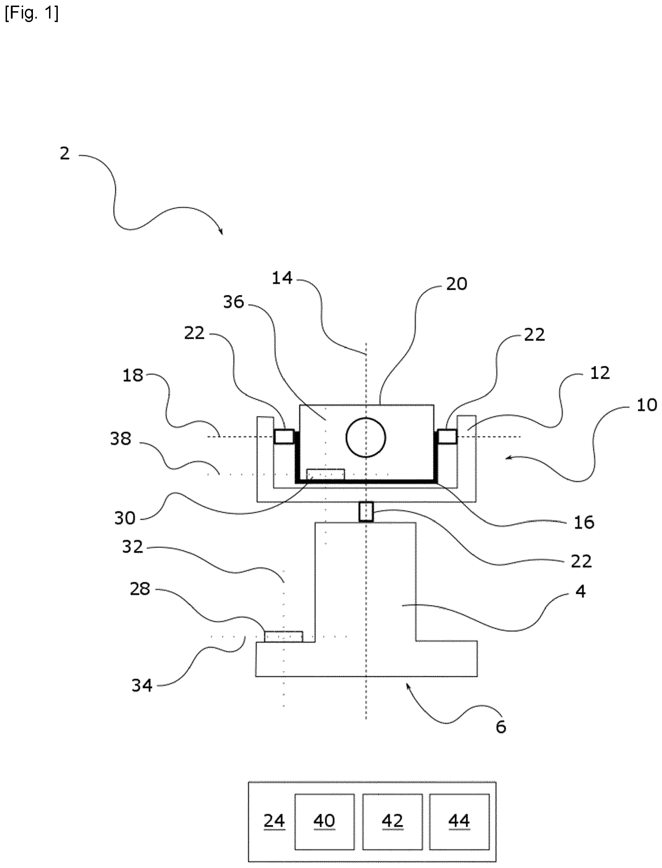

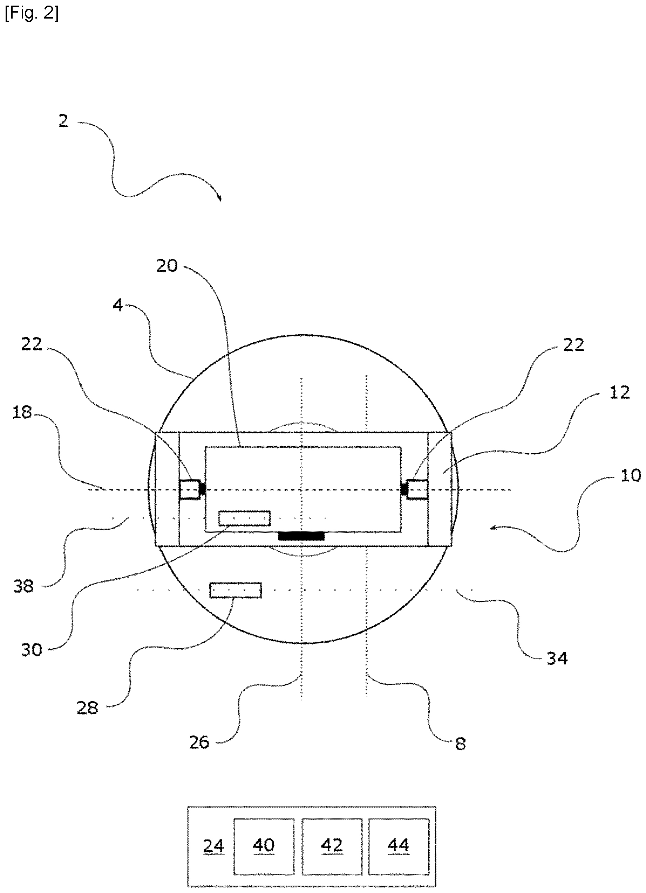

Les figures 1 et 2 illustrent un exemple non limitatif d'un système de visée 2 selon l'invention. Le système de visée 2 comporte une embase 4 avec une face d'appui 6 destinée à être maintenue contre un référentiel non représenté sur les figures. Par le terme « référentiel », on entend une plateforme mobile ou un bâtiment. Selon le présent exemple, la face d'appui 6 est de surface plane. L'embase 4 comporte également un repère tel que des pions de centrage, matérialisant une direction de positionnement 8 de l'embase sur le référentiel. La direction de positionnement 8 permet notamment un positionnement angulaire précis de l'embase sur le référentiel (voir figure 2). La direction de positionnement est de préférence parallèle ou sensiblement parallèle à la face d'appui 6 de l'embase.

À une extrémité opposée de la face d'appui 6, une structure articulée 10 est montée sur l'embase 4. La structure articulée se compose d'une fourche 12 pivotable par rapport à l'embase, selon un premier axe de rotation appelé « axe gisement ». L'axe gisement 14 est orthogonal ou sensiblement orthogonal à la face d'appui 6 de l'embase. Les branches de la fourche 12 maintiennent un berceau 16 de sorte à permettre son pivotement selon un deuxième axe de rotation appelé « axe site ». L'axe site 18 est orthogonal ou sensiblement orthogonal à l'axe gisement 14.

Le système de visée 2 est complété par un dispositif de visée 20 monté sur le berceau 16. Le dispositif de visée 20 est monté de façon réversible sur le berceau 16 pour permettre sa substitution, en cas de défaillance, par un dispositif similaire. Le dispositif de visée 20 est lié de manière rigide au berceau 16, afin que la structure articulée 10 puisse faire pivoter de façon précise le dispositif de visée par rapport à l'embase 4 pour aligner une direction de visée 26 dudit dispositif sur une cible. Le dispositif de visée 20 est de préférence un dispositif optronique du type caméra thermique, caméra jour, voie nocturne à intensification de lumière ou encore télémètre LASER.

Le système de visée 2 comprend également des moyens de motorisation 22 aptes à entrainer le pivotement de la fourche 12 autour de l'axe gisement 14 ainsi que le pivotement du berceau 16 autour de l'axe site 18. Les moyens de motorisation 22 sont pilotés par une unité centrale 24. Selon le présent exemple, l'unité centrale 24 est distincte du système de visée 2. Ce mode de réalisation n'est pas limitatif de sorte que l'unité centrale 24 pourrait être solidaire du système de visée.

Comme mentionné précédemment, lorsque le système de visée 2 est associé à un référentiel, il est nécessaire de connaître aussi précisément que possible la position de la direction de visée 26 par rapport au référentiel, pour permettre une identification précise de la position de la cible, suivie par le système de visée 2, par rapport au référentiel. En d'autres termes, on doit connaître à tout moment l'orientation de la direction de visée 26 par rapport à la direction de positionnement 8 de l'embase 4. Afin de référencer la direction de visée 26 par rapport au référentiel, il est nécessaire de coupler ou harmoniser, la direction de visée 26 avec la direction de positionnement 8 de l'embase. Ainsi, lorsque la direction de visée 26 est alignée sur une cible, on connaît le cap de la cible par rapport à l'embase et donc indirectement par rapport au référentiel. Le couplage entre ces deux directions doit être réalisé avec une précision inférieure à 100 µrad. Pour atteindre ce degré de précision, il est nécessaire de placer le système de visée sur un support, équipé d'un miroir de référence, et d'employer un outillage de référencement optique comprenant une lunette autocollimatrice. Le procédé de couplage nécessite donc l'emploi d'éléments fragiles et encombrants, difficilement transportables et utilisables sur site. C'est la raison pour laquelle le procédé de calibrage est à ce jour uniquement réalisé en atelier. Ainsi, en cas de défaillance du dispositif de visée, il est nécessaire de retourner l'ensemble du système de visée en atelier, afin de remplacer le dispositif de visée puis effectuer un nouveau procédé de calibrage du système de visée. Cela engendre des coûts de maintenance qui sont significatifs et une période d'indisponibilité du système visée relativement longue.

L'invention vise à offrir des moyens permettant de déterminer sur site, de manière simple, rapide et précise, l'angle d'inclinaison formé entre la direction de positionnement de l'embase 4 et la direction de visée 26 d'un dispositif de visée de substitution, sans mettre en oeuvre l'outillage sophistiqué mentionné ci-dessus et uniquement disponible en atelier.

Afin de résoudre les problèmes techniques mentionnés ci-dessus, l'invention se distingue de l'état de la technique en ce que le système de visée comprend un premier capteur d'inclinaison 28 lié à l'embase 4, et un second capteur d'inclinaison 30 lié au dispositif de visée 20. Par le terme « capteur d'inclinaison », on entend des moyens aptes à mesurer un angle entre un objet et l'axe de la gravité terrestre. Chaque capteur est lié de manière rigide à son support, de sorte que son inclinaison par rapport à son support soit constante ou sensiblement constante au cours du temps. Chaque capteur d'inclinaison comprend un nombre d'axes de mesure égal ou supérieur au nombre d'axes de rotation du berceau 16. À ce titre, un capteur d'inclinaison peut comprendre plusieurs capteurs physiquement distincts, comportant chacun un nombre plus restreint d'axes de mesure. Les capteurs d'inclinaison sont aptes à réaliser des mesures de valeurs d'inclinaisons selon une précision de l'ordre de 0,001°. Les capteurs d'inclinaison peuvent être identiques, comme par exemple des accéléromètres type Servo d'équilibre de force.

Selon le présent exemple, le premier capteur d'inclinaison 28 comporte deux axes de mesure orthogonaux ou sensiblement orthogonaux entre eux. Le premier capteur d'inclinaison 28 est maintenu au plus proche de la face d'appui 6 de l'embase 4, à une distance égale ou inférieure à 5 cm, de préférence égale ou inférieure à 2 cm. Le premier capteur d'inclinaison 28 est orienté de sorte qu'un premier axe de mesure 32 du capteur soit parallèle ou sensiblement parallèle à l'axe gisement 14, et un second axe de mesure 34 du capteur soit parallèle ou sensiblement parallèle à l'axe site 18.

Le second capteur d'inclinaison 30 comporte également deux axes de mesure orthogonaux ou sensiblement orthogonaux entre eux. Le second capteur d'inclinaison 30 est maintenu au plus proche de la direction de visée 26 du dispositif de visée 20, à une distance égale ou inférieure à 5 cm, de préférence égale ou inférieure à 2 cm. Le second capteur d'inclinaison 30 est orienté de sorte qu'un premier axe de mesure 36 du capteur soit parallèle ou sensiblement parallèle à l'axe gisement 14, et un second axe de mesure 38 du capteur soit parallèle ou sensiblement parallèle à l'axe site 18.

Les capteurs d'inclinaison sont connectés à l'unité centrale 24 par des moyens de connexion, pour transmettre en temps réel à l'unité centrale 24 les mesures d'angles d'inclinaison réalisées. L'unité centrale 24 comprend des moyens de mémorisation 40 aptes à mémoriser des valeurs d'angles d'inclinaison de référence ou mesures de références, et au moins un procédé de couplage décrit ci-après. L'unité centrale 24 comporte également des moyens de calcul 42 tel qu'un calculateur, aptes à effectuer des comparaisons entre des mesures d'angles d'inclinaison réalisées par les capteurs d'inclinaisons et des valeurs d'angles d'inclinaison de référence, mémorisées préalablement par les moyens de mémorisation 40. L'unité centrale 24 peut également comprendre des moyens de communication 44. Les moyens de communication sont aptes à indiquer à un dispositif tiers ou à un opérateur, une orientation de la direction de visée 26 par rapport à la direction de positionnement 8 de l'embase, en fonction des opérations effectuées par les moyens de calcul 42.

Le système de visée 2 permet avantageusement de mettre en oeuvre un procédé de couplage en atelier, puis un procédé de couplage sur site décrits ci-dessous, entre la direction de visée du dispositif de visée et la direction de positionnement de l'embase.

### PROCÉDÉ DE COUPLAGE ORIGINE

Le système de visée décrit ci-dessus est obtenu suite à l'assemblage en atelier, des différents éléments décrits ci-dessus. Après le montage, pour la première fois, du dispositif de visée 20 sur le berceau 16 porté par l'embase 4, il est nécessaire de réaliser un procédé de couplage « origine ». Le procédé de couplage origine vise à référencer la direction de visée du dispositif de visée et la direction de positionnement de l'embase, de sorte que lorsque la direction de visée pointe une cible, on puisse connaître avec une précision égale ou inférieure à 0,001°, le cap de la cible par rapport à l'embase. Le procédé de couplage origine est réalisé en atelier, il se décompose en deux phases d'harmonisation distinctes et successives, telles que décrites ci-dessous.

### PHASE D'HARMONISATION DU PREMIER CAPTEUR D'INCLINAISON PAR RAPPORT A LA FACE D'APPUI DE L'EMBASE

La phase d'harmonisation du premier capteur d'inclinaison consiste à dégauchir les valeurs mesurées par le premier capteur d'inclinaison 28, par rapport à la surface du référentiel sur laquelle le système de visée sera monté. Par le terme « dégauchir », on entend le fait de corriger les mesalignements entre le plan défini par les deux axes de mesure du premier capteur d'inclinaison et la surface de contact avec la surface du référentiel. Cette mesure n'est pas directe dans la mesure où le premier capteur d'inclinaison renseigne sur un écart angulaire entre la face d'appui 6 de l'embase et l'axe de gravité terrestre. Or nous souhaitons connaître l'écart entre la face d'appui de l'inclinomètre et la surface d'appui 6 de l'embase. Pour ce faire, nous allons procéder en plusieurs étapes. La phase d'harmonisation du premier capteur d'inclinaison met en oeuvre une première étape, consistant à placer la face d'appui 6 de l'embase du système de visée 2 contre un marbre de laboratoire. Par les termes « marbre de laboratoire », on entend une surface plane horizontale ou sensiblement horizontale, dont la planéité est supérieure à la planéité de la face d'appui 6 de l'embase.

Lors d'une deuxième étape, l'unité centrale 24 enregistre les valeurs des angles d'inclinaison mesurées par le premier capteur d'inclinaison 28 et les mémorise en tant que premières valeurs. Selon une troisième étape, l'embase 4 est pivotée autour de l'axe gisement 14 selon un angle de référence, selon le présent exemple 180°, puis l'unité centrale 24 enregistre les valeurs des angles d'inclinaison mesurées par le premier capteur d'inclinaison 28 et les mémorise en tant que deuxièmes valeurs. Selon une quatrième étape, l'unité centrale 24 calcule des valeurs de décalage D, entre la planéité de la face d'appui 6 de l'embase et la planéité du marbre, afin d'éliminer les inclinaisons absolues du marbre de laboratoire et ne conserver que les inclinaisons relatives entre le premier capteur d'inclinaison 28 et la face d'appui 6. À titre d'exemple non limitatif, les valeurs de décalage D sont calculées de la façon suivante lorsque la valeur de l'angle d'inclinaison de référence est égale à 180°, en soustrayant la deuxième valeur mesurée à la première valeur mesurée, pour chaque axe de mesure.

Ces valeurs de décalage D sont mémorisées par les moyens de mémorisation 40 de l'unité centrale 24, de manière à dégauchir les valeurs mesurées par le premier capteur d'inclinaison 28, par rapport à la surface du référentiel sur laquelle le système de visée sera monté.

### PHASE D'HARMONISATION DU SECOND CAPTEUR AVEC LE PREMIER CAPTEUR D'INCLINAISON

La deuxième phase d'harmonisation consiste à employer un outillage de référencement optique tel que mentionné ci-dessus. Selon une première étape, une lunette autocollimatrice est fixée sur l'embase de manière à ce que son axe optique soit aligné avec la direction de positionnement 8 de l'embase, selon une précision égale ou inférieure à 100 µrad. La structure articulée 10 est par la suite mise en mouvement pour pivoter le berceau 16 autour de l'axe gisement 14 et de l'axe site 18, jusqu'à ce que la direction de visée 26 et la direction de positionnement 8 soient alignées ou sensiblement alignées, selon la lunette autocollimatrice, avec une précision égale ou inférieure à 100 µrad.

Selon une deuxième étape, lorsque les axes de visée et de positionnement sont colinéaires, l'unité centrale 24 relève les valeurs d'angles d'inclinaison mesurées par le premier capteur d'inclinaison 28 et le second capteur d'inclinaison 30. Ces valeurs d'angles d'inclinaison sont mémorisées, par les moyens de mémorisation 40 de l'unité centrale, comme valeurs d'angles d'inclinaison de référence ou mesures de référence pour chaque capteur.

### PROCÉDÉ DE COUPLAGE SUR SITE

Le procédé de couplage origine décrit ci-dessus permet avantageusement de mettre en oeuvre un procédé de couplage sur site, sans qu'il soit pour cela nécessaire d'employer l'outillage de référencement optique utilisé en atelier.

En effet, pour réaliser un procédé de couplage sur site, il suffit de mettre en oeuvre une première étape consistant à pivoter le berceau 16 d'un certain angle, autour de l'axe gisement 14 et de l'axe site 18, avant de l'immobiliser. Selon une deuxième étape, l'unité centrale 24 relève les valeurs d'angles d'inclinaison mesurées par le premier capteur d'inclinaison 28 et le second capteur d'inclinaison 30. Selon une troisième étape, les valeurs d'angles d'inclinaison mesurées par chaque axe de mesure des capteurs d'inclinaison sont comparées avec les valeurs d'angles d'inclinaison de référence mémorisées et associées à chaque axe de mesure desdits capteurs. Pour rappel, les valeurs d'angles d'inclinaison de référence correspondent aux valeurs mémorisées lors de la phase d'harmonisation du second capteur d'inclinaison avec le premier capteur d'inclinaisons telle que décrite ci-dessus. Dans le cas où l'écart entre au moins une valeur mesurée et une valeur d'angle d'inclinaison de référence associée, est égal ou supérieur à une valeur seuil, les deux étapes du procédé de couplage sur site sont reproduites. Dans le cas où l'écart entre chaque valeur mesurée et chaque valeur d'angle d'inclinaison de référence associée, est inférieur à la valeur seuil, l'unité centrale 24 communique à un dispositif tiers ou à un opérateur, un message de confirmation du bon alignement entre la direction de visée 26 et la direction de positionnement 8, dans un plan parallèle ou sensiblement parallèle à la face d'appui 6 de l'embase.

Ainsi, le système de visée 2 selon l'invention permet de mettre en oeuvre un procédé de couplage sur site, de façon simple et rapide, sans qu'il soit pour cela nécessaire d'employer un outillage de référencement optique encombrant.

Selon une variante de réalisation du procédé de couplage sur site décrit ci-dessus, le berceau 16 est pivoté de façon continue ou séquentielle, autour de l'axe gisement 14 et de l'axe site 18, jusqu'à ce que les valeurs mesurées par le premier et le second inclinomètre sont identiques ou relativement identiques aux valeurs d'angles d'inclinaison de référence associées à chaque inclinomètre. Le berceau est alors orienté selon une position « origine » par rapport à l'embase 4. Les valeurs mesurées par le premier et le second inclinomètre, sont ensuite enregistrées par l'unité centrale 24 comme nouvelles valeurs « origines » en azimut et en élévation pour le dispositif de visée 20. En d'autres termes, lorsque le berceau 16 sera de nouveau orienté en position « origine » par raport à l'embase, les valeurs en azimut et en élévation du dispositif de visée seront considérées comme nulle par l'unité centrale.

### PROCÉDÉ DE SUBSTITUTION SUR SITE DU DISPOSITIF DE VISÉE

Grâce à l'invention, il est à présent possible de substituer sur site, un dispositif de visée 20 défaillant par un autre dispositif de visée, sans qu'il soit pour cela nécessaire de retourner l'ensemble du système de visée 2 en atelier. Pour cela, il suffit de procéder à une première étape de substitution consistant à démonter le système de visée 2 défaillant du berceau 16. Selon une seconde étape, un dispositif de visée de substitution opérationnel, comportant un second capteur d'inclinaison 30 selon l'invention, est monté sur le berceau 16 à la place du précédent dispositif de visée. Il est à noter que le dispositif de visée de substitution a préalablement été calibré, au sens de l'invention et conformément au procédé d'harmonisation du second capteur d'inclinaison décrit ci-dessus. Le dispositif de substitution a été calibré avec la même embase 4 et la même structure articulée 10 que le présent système de visée ou bien avec une embase et une structure articulée similaire, comprenant un premier capteur d'inclinaison positionné de façon identique à l'embase dudit système de visée. Lors d'une troisième étape, les valeurs d'angles d'inclinaison de référence associées au second capteur d'inclinaison présent sur le dispositif de visée de substitution sont mémorisées par l'unité centrale 24 du système de visée. Puis lors d'une quatrième étape, le procédé de couplage sur site décrit ci-dessus est mis en oeuvre.

En d'autres termes, en reproduisant le procédé de calibrage en atelier pour une série identique de systèmes de visée, on peut par la suite substituer les dispositifs de visée entre eux afin, par exemple, de remplacer un dispositif de visée défaillant par un dispositif de visée opérationnel. Il est alors aisé et rapide d'effectuer un calibrage précis sur site, sans utiliser un outillage de référencement optique encombrant.

Le système de visée ainsi que les procédés de calibrage selon l'invention, permettent donc de réduire le coût ainsi que le temps de maintenance d'un système de visée.

## Revendications

1. Système de visée (2) comprenant une embase (4) supportant un berceau (16), le berceau (16) maintenant un dispositif de visée (20) muni d'une direction de visée (26), le berceau (16) étant apte à faire pivoter selon au moins un axe de rotation, le dispositif de visée (20) par rapport à l'embase (4), un premier capteur d'inclinaison (28) lié de manière rigide à l'embase (4), le système de visée se **caractérise en ce qu'**il comprend un second capteur d'inclinaison (30) lié de manière rigide au dispositif de visée (20) ainsi que des moyens de connexion de chaque capteur d'inclinaison à une unité centrale (24), l'unité centrale (24) est apte à mesurer une différence entre les mesures réalisées par chaque capteur d'inclinaison de sorte à quantifier un angle d'inclinaison entre l'embase (4) et le dispositif de visée (20).

2. Système de visée (2) selon la revendication 1, **caractérisé en ce que** le berceau (16) est apte à faire pivoter le dispositif de visée (20) autour d'un axe site (18), orthogonal ou sensiblement orthogonal à la direction de visée (26) du dispositif de visée (20).

3. Système de visée (2) selon la revendication 2, **caractérisé en ce que** le berceau (16) est apte à faire pivoter le dispositif de visée (20) autour d'un axe gisement (14), orthogonal ou sensiblement orthogonal à l'axe site (18).

4. Système de visée (2) selon la revendication 2 ou 3, **caractérisé en ce que** l'axe site (18) est parallèle ou sensiblement parallèle à une face d'appui (6) de l'embase, la face d'appui (6) étant destinée à être maintenue contre un référentiel.

5. Système de visée (2) selon la revendication 3 ou 4, **caractérisé en ce que** le berceau (16) est maintenu à l'embase (4) par l'intermédiaire d'une fourche (12), la fourche est apte à pivoter par rapport à l'axe gisement (14) et à faire pivoter le berceau (16) par rapport à l'axe site (18).

6. Système de visée (2) selon l'une des revendications 3 à 5, **caractérisé en ce que** le système de visée (2) comprend des moyens de motorisation pilotés par l'unité centrale (24), aptes à faire pivoter le berceau (16) autour de l'axe site (18) et de l'axe gisement (14).

7. Système de visée (2) selon l'une des revendications 1 à 6, **caractérisé en ce que** l'unité centrale (24) comprend des moyens de mémorisation, aptes à mémoriser au moins une mesure de référence associée au premier capteur d'inclinaison (28) et au moins une mesure de référence associée au second capteur d'inclinaison (30), l'unité centrale (24) comprend également des moyens de comparaison entre des mesures réalisées par le premier et le second capteur d'inclinaison (30), par rapport aux mesures de référence associées à chaque capteur d'inclinaison.

8. Système de visée (2) selon l'une des revendications 1 à 7, **caractérisé en ce que** le premier capteur d'inclinaison (28) est positionné à proximité d'une face d'appui (6) de l'embase (4), la face d'appui (6) étant destinée à être maintenue contre un référentiel.

9. Système de visée (2) selon l'une des revendications 1 à 8, **caractérisé en ce que** le second capteur d'inclinaison (30) est positionné à proximité de la direction de visée (26) du dispositif de visée (20).

10. Système de visée (2) selon l'une des revendications 1 à 9, **caractérisé en ce que** le dispositif de visée (20) comprend un dispositif optronique.

11. Plateforme mobile comprenant un système de visée (2) selon l'une des revendications 1 à 10.

12. Procédé de couplage d'un système de visée (2) selon l'une des revendications 1 à 10, mettant en oeuvre les étapes suivantes :
- une étape de couplage entre la direction de visée (26) du dispositif de visée (20) et une direction de positionnement de l'embase (4) ; puis
- une étape de mémorisation par l'unité centrale (24) d'au moins une mesure de référence pour le premier capteur d'inclinaison (28) et au moins une mesure de référence pour le second capteur d'inclinaison (30), lorsque le dispositif de visée (20) est immobile par rapport à l'embase (4).

13. Procédé de couplage selon la revendication 12, **caractérisé en ce qu'**au moins une mesure de référence, associée au premier et au second capteur d'inclinaison (30), est mémorisée par l'unité centrale (24) après le pivotement de l'embase (4) autour d'un axe site (18), orthogonal ou sensiblement orthogonal à une face d'appui (6) de l'embase (4), la face d'appui (6) étant maintenue contre un référentiel, et l'embase (4) est pivotée plusieurs fois autour de l'axe site (18) de manière à réaliser une rotation complète autour dudit axe.

14. Procédé de couplage selon la revendication 12 ou 13, mettant en oeuvre les étapes suivantes :
- substitution du dispositif de visée (20) par un autre dispositif de visée ; puis
- réalisation d'au moins une mesure par le premier et le second capteur d'inclinaison (30), lorsque le berceau (16) est immobile par rapport à l'embase (4) ; puis
- comparaison d'au moins une mesure réalisée par le premier et le second capteur d'inclinaison (30) avec au moins une mesure de référence associée au premier et au second capteur d'inclinaison (30), de manière à identifier l'orientation de la direction de visée (26) du dispositif par rapport à une direction de positionnement de l'embase (4).

15. Procédé de couplage selon l'une des revendications 12 à 14, **caractérisé en ce que** l'unité centrale (24) est configurée pour piloter le pivotement du dispositif de visée (20) par rapport à l'embase (4) à l'aide de moyens de motorisation, jusqu'à ce que les mesures réalisées par le premier et le second capteur d'inclinaison (30) soient identiques ou sensiblement identiques aux mesures de référence associées à chaque capteur d'inclinaison.

## Patentansprüche

1. Zielsystem (2) mit einem Sockel (4), der eine Aufhängung (16) trägt, wobei die Aufhängung (16) eine mit einer Zielrichtung (26) versehene Zielvorrichtung (20) hält, wobei die Aufhängung (16) geeignet ist, die Zielvorrichtung (20) gegenüber dem Sockel (4) um mindestens eine Drehachse zu schwenken, und einem fest mit dem Sockel (4) verbundenen ersten Neigungssensor (28), wobei das Zielsystem **dadurch gekennzeichnet ist, daß** es einen mit der Zielvorrichtung (20) fest verbundenen zweiten Neigungssensor (30) und Mittel zum Verbinden jedes Neigungssensors mit einer Zentraleinheit (24) aufweist, wobei die Zentraleinheit (24) dazu ausgelegt ist, einen Unterschied zwischen den von jedem Neigungssensor gemachten Messungen zu messen, um einen Neigungswinkel zwischen dem Sockel (4) und der Zielvorrichtung (20) zu quantifizieren.

2. Zielsystem (2) gemäß Anspruch 1, **dadurch gekennzeichnet, daß** die Aufhängung (16) geeignet ist, die Zielvorrichtung (20) um eine zur Zielrichtung (26) der Zielvorrichtung (20) senkrechte oder im Wesentlichen senkrechte Standortachse (18) zu schwenken.

3. Zielsystem (2) gemäß Anspruch 2, **dadurch gekennzeichnet, daß** Aufhängung (16) geeignet ist, die Zielvorrichtung (20) um eine zur Standortachse (18) senkrechte oder im Wesentlichen senkrechte Lagerachse (14) zu schwenken.

4. Zielsystem (2) gemäß Anspruch 2 oder 3, **dadurch gekennzeichnet, daß** die Standortachse (18) zu einer Auflagefläche (6) des Sockels parallel oder im Wesentlichen parallel ist, wobei die Auflagefläche (6) dazu bestimmt ist, gegen eine Bezugsebene gehalten zu werden.

5. Zielsystem (2) gemäß Anspruch 3 oder 4, **dadurch gekennzeichnet, daß** die Aufhängung (16) am Sockel (4) durch eine Gabel (12) gehalten wird und daß die Gabel in der Lage ist, gegenüber der Lagerachse (14) zu schwenken und die Aufhängung (16) gegenüber der Standortachse (18) zu schwenken.

6. Zielsystem (2) gemäß einem der Ansprüche 3 bis5, **dadurch gekennzeichnet, daß** das Zielsystem (2) durch die Zentraleinheit (24) gesteuerte Antriebsmittel aufweist, die geeignet sind, die Aufhängung (16) um die Standortachse (18) und die Lagerachse (14) zu schwenken.

7. Zielsystem (2) gemäß einem der Ansprüche 1 bis 6, **dadurch gekennzeichnet, daß** die Zentraleinheit (24) Speichermittel aufweist, die geeignet sind, mindestens eine dem ersten Neigungssensor (28) zugeordnete Referenzmessung und mindestens eine dem zweiten Neigungssensor (30) zugeordnete Referenzmessung zu speichern, und daß die Zentraleinheit (24) außerdem Mittel zum Vergleichen der vom ersten und vom zweiten Neigungssensor (30) gemachten Messungen mit den jedem Neigungssensor zugeordneten Referenzmessungen aufweist.

8. Zielsystem (2) gemäß einem der Ansprüche 1 bis 7, **dadurch gekennzeichnet, daß** der erste Neigungssensor (28) in der Nähe einer Auflagefläche (6) des Sockels (4) angeordnet ist, wobei die Auflagefläche (6) dazu bestimmt ist, gegen eine Bezugsebene gehalten zu werden.

9. Zielsystem (2) gemäß einem der Ansprüche 1 bis 8, **dadurch gekennzeichnet, daß** der zweite Neigungssensor (30) in der Nähe der Zielrichtung (26) der Zielvorrichtung (20) angeordnet ist.

10. Zielsystem (2) gemäß einem der Ansprüche 1 bis 9, **dadurch gekennzeichnet, daß** die Zielvorrichtung (20) eine Optronikvorrichtung aufweist.

11. Mobile Plattform mit einem Zielsystem (2) gemäß einem der Ansprüche 1 bis 10.

12. Verfahren zum Koppeln eines Zielsystems (2) gemäß einem der Ansprüche 1 bis 10, das die folgenden Schritte durchführt:
- einen Schritt des Koppelns zwischen der Zielrichtung (26) der Zielvorrichtung (20) und einer Anordnungsrichtung des Sockels (4), dann
- einen Schritt des Speicherns mindestens einer Referenzmessung für den ersten Neigungssensor (28) und mindestens einer Referenzmessung für den zweiten Neigungssensor (30) durch die Zentraleinheit (24), wenn die Zielvorrichtung (20) gegenüber dem Sockel (4) nicht bewegt wird.

13. Kopplungsverfahren gemäß Anspruch 12, **dadurch gekennzeichnet, daß** mindestens eine dem ersten und dem zweiten Neigungssensor (30) zugeordnete Referenzmessung nach dem Schwenken des Sockels (4) um eine zu einer Auflagefläche (6) senkrechte oder im Wesentlichen senkrechte Standortachse (18) durch die Zentraleinheit (24) gespeichert wird, wobei die Auflagefläche (6) gegen eine Bezugsebene gehalten wird, und der Sockel (4) mehrere Male um die Standortachse (18) geschwenkt wird, um eine volle Drehung um die Achse auszuführen.

14. Kopplungsverfahren gemäß Anspruch 12 oder 13, **dadurch gekennzeichnet, daß** die folgende n Schritte durchgeführt werden:
- Ersetzen der Zielvorrichtung (20) durch eine andere Zielvorrichtung, dann
- Durchführen mindestens einer Messung durch den ersten und den zweiten Neigungssensor (30), wenn die Aufhängung (16) gegenüber dem Sockel (4) unbewegt ist, dann
- Vergleichen mindestens einer durch den ersten und den zweiten Neigungssensor (30) durchgeführten Messung mit einer dem ersten und dem zweiten Neigungssensor (30) zugeordneten Bezugsmessung, um die Orientierung der Zielrichtung (26) der Vorrichtung gegenüber einer Anordnungsrichtung des Sockels (4) zu identifizieren.

15. Kopplungsverfahren gemäß einem der Ansprüche 12 bis 14, **dadurch gekennzeichnet, daß** die Zentraleinheit (24) dazu ausgelegt ist, das Schwenken der Zielvorrichtung (20) gegenüber dem Sockel (4) mit Hilfe von Motorisierungsmitteln zu steuern, bis die vom ersten und zweiten Neigungssensor (30) durchgeführten Messungen identisch oder im Wesentlichen identisch mit den jedem Neigungssensor zugeordneten Bezugsmessungen ist.

## Claims

1. A sighting system (2) comprising a base (4) supporting a cradle (16), the cradle (16) holding a sighting device (20) having a line of sight (26), the cradle (16) being adapted to make the sighting device (20) pivot about at least one axis of rotation with respect to the base (4), a first tilt sensor (28) rigidly attached to the base (4), the sighting system is **characterized in that** it comprises a second tilt sensor (30) rigidly attached to the sighting device (20) as well as means for connecting each tilt sensor to a central unit (24), the central unit (24) is adapted to measure a difference between the measurements made by each tilt sensor, in such a way as to quantify a tilt angle between the base (4) and the sighting device (20).

2. The sighting system (2) according to claim 1, **characterized in that** the cradle (16) is adapted to make the sighting device (20) pivot about a site axis (18), orthogonal or substantially orthogonal to the line of sight (26) of the sighting device (20).

3. The sighting system (2) according to claim 2, **characterized in that** the cradle (16) is adapted to make the sighting device (20) pivot about a bearing axis (14), orthogonal or substantially orthogonal to the site axis (18).

4. The sighting system (2) according to claim 2 or 3, **characterized in that** the site axis (18) is parallel or substantially parallel to a bearing face (6) of the base, the bearing face being intended to be held against a reference frame.

5. The sighting system (2) according to claim 3 or 4, **characterized in that** the cradle (16) is held to the base (4) through a fork (12), the fork being adapted to pivot with respect to the bearing axis (14) and to make the cradle (16) pivot with respect to the site axis (18).

6. The sighting system (2) according to one of the claims 3 to 5, **characterized in that** the sighting system (2) comprises motor means controlled by the central unit (24), adapted to make the cradle (16) pivot about the site axis (18) and the bearing axis (14).

7. The sighting system (2) according to one of the claims 1 to 6, **characterized in that** the central unit (24) comprises storage means, adapted to store at least one reference measurement associated with the first tilt sensor (28) and at least one reference measurement associated with the second tilt sensor (30), the central unit (24) also comprising means for comparing measurements made by the first and the second tilt sensor (30), with respect to the reference measurements associated with each tilt sensor.

8. The sighting system (2) according to one of the claims 1 to 7, **characterized in that** the first tilt sensor (28) is positioned near a bearing face (6) of the base (4), the bearing face (6) being intended to be held against a reference frame.

9. The sighting system (2) according to one of the claims 1 to 8, **characterized in that** the second tilt sensor (30) is positioned near the line of sight (26) of the of the sighting device (20).

10. The sighting system (2) according to one of the claims 1 to 9, **characterized in that** the sighting device (20) comprises an optronic device.

11. A mobile platform comprising a sighting system (2) according to one of the claims 1 to 10.

12. A method for coupling a sighting system (2) according to one of the claims 1 to 10, implementing the following steps:
- a step of coupling the line of sight (26) of the sighting device (20) with a location direction of the base (4); then
- a step of storing by the central unit (24) at least one reference measurement for the first tilt sensor (28) and at least one reference measurement for the second tilt sensor (30), when the sighting device (20) is still with respect to the base (4).

13. The coupling method according to claim 12, **characterized in that** at least one reference measurement, associated with the first and the second tilt sensor (30), is stored by the central unit (24) after the pivoting of the base (4) about a site axis (18), orthogonal or substantially orthogonal to a bearing face (6) of the base (4), the bearing face (6) being held against a reference frame, and the base (4) is pivoted several times about the site axis (18) in such a way as to carry out a complete rotation about said axis.

14. The coupling method according to claim 12 or 13, implementing the following steps:
- replacing the sighting device (20) by another sighting device; then
- making at least one measurement by the first and the second tilt sensor (30), when the cradle (16) is still with respect to the base (4); then
- comparing at least one measurement made by the first and the second tilt sensor (30) with at least one reference measurement associated with the first and the second tilt sensor (30), in such a way as to identify the orientation of the line of sight (26) of the device with respect to a location direction of the base (4).

15. The coupling method according to one of the claims 12 to 14, **characterized in that** the central unit (24) is configured to control the pivoting of the sighting device (20) with respect to the base (4) using motor means, until the measurements made by the first and the second tilt sensor (30) are identical or substantially identical to the reference measurements associated with each tilt sensor.
